# EUROPÄISCHE PATENTSCHRIFT

(11) **EP 2 616 529 B1**
(45) Veröffentlichungstag und Bekanntmachung des Hinweises auf die Patenterteilung: **07.11.2018**
(21) Anmeldenummer: 11764099.5
(22) Anmeldetag: 15.09.2011
(51) Int. Cl.: C10J 3/84, C10J 3/52, C10K 1/10

(54) **VORRICHTUNG UND VERWENDUNG DER VORRICHTUNG ZUR BEHANDLUNG EINES SCHLACKEHALTIGEN HEISSGASSTROMES**
DEVICE AND USE OF THE DEVICE FOR TREATING A HOT GAS FLOW CONTAINING SLAG
DISPOSITIF ET UTILISATION DU DISPOSITIF DE TRAITEMENT D'UN COURANT DE GAZ CHAUD CONTENANT UN LAITIER

(30) Priorität: 16.09.2010 DE 102010045482; 16.09.2010 DE 102010045481
(43) Veröffentlichungstag der Anmeldung: 24.07.2013
(73) Patentinhaber: CCG Energy Technology Company Ltd., Tsimshatsui, Kowloon (CN)
(72) Erfinder: SCHULZE, Olaf, 09633 Halsbrücke (DE); RÜGER, Dietmar, 01728 Goppeln (DE); ALTHAPP, Anton, 09600 Oberschöna (DE); GÄTKE, Michael, 09599 Freiberg (DE); MÖLLER, Burkhard, 09599 Kleinwaltersdorf (DE); GRUNWALD, Reinhold, 02977 Hoyerswerda (DE)
(74) Vertreter: Lippert Stachow Dresden
(86) Internationale Anmeldenummer: PCT/EP2011/004629
(87) Internationale Veröffentlichungsnummer: WO 2012/034700

(56) Entgegenhaltungen:
- DE-A1- 3 712 007
- DE-A1- 4 025 955
- DE-A1- 4 229 895
- DE-A1-102007 001 385
- DE-A1-102008 012 732
- US-A- 2 896 927
- US-A1- 2009 202 403

## Beschreibung

Die Erfindung bezieht sich auf eine Vorrichtung und deren Verwendung zur Behandlung eines schlackehaltigen Heißgasstromes. Ferner bezieht sich die Erfindung auf eine Flugstromvergaseranlage, die die erfindungsgemäße Vorrichtung umfasst.

Zur Abkühlung von heißen, mit Schlacke beladenen Reaktionsgasen und zur Abtrennung der Schlacke werden industriell hergestellte Reaktionsgase in an sich bekannter Weise in Kontakt mit einem Kühlmittel gebracht, wobei dafür das Einsprühen einer Kühlflüssigkeit in den Heißgasstrom (Freiraumquenchung) und/oder das Hindurchleiten des Reaktionsgases durch ein Kühlmittelbad (Tauchquenchung) genutzt werden. Beide Quenchvarianten besitzen Vor- und Nachteile. Während die Freiraumquenchung eine hohe Qualität des Kühlwassers voraussetzt, kann mit einer Tauchquenchung eine Mehrfachnutzung des Kühlmittels in Abhängigkeit vom Feststoffanteil und dessen Eigenschaften erreicht werden. Die Anwendung der einen oder anderen Quenchvariante ist von den äußeren Bedingungen des vorgelagerten Prozesses und den Eigenschaften der Einsatzprodukte abhängig. Vielfach zeigt sich erst während des praktischen Einsatzes der Quenchvorrichtung, ob die Auswahl der Quencheinrichtungen optimal getroffen wurde. Auch können sich die Verfahrensbedingungen, die der Planung der Verfahrensführung zugrunde liegen, im Laufe der Zeit ändern. Hierunter fällt etwa die veränderliche Qualität der Einsatzprodukte. Es sind deshalb Kombinationen von Freiraumquenchung und Tauchquenchung bekannt, deren Vorteil in der Anpassbarkeit an veränderte Einsatzbedingungen besteht.

Im Folgenden wird der Begriff Kühlmittel stellvertretend für alle zur Gasquenchung geeigneten fluiden Kühlmittel oder Kühlmittelmischungen, insbesondere Wasser, verwendet.

Die DD 280 975 B3 beschreibt ein Verfahren und eine Vorrichtung zur Kühlung und Reinigung von mit Schlacke beziehungsweise Staub beladenen Heißgasen. Dazu strömt das zu kühlende und zu reinigende Gas als Freistrahl in eine Quenchvorrichtung, in der sich ein Kühlmittelbad befindet, in dem die Schlacketeilchen abgeschieden werden. In Höhe der Gaseintrittsöffnung sind im Schatten des nach unten gerichteten Heißgas-Freistrahls bis zu drei Düsenringe angeordnet, deren Sprühdüsen den heißen Gasstrahl im Wesentlichen orthogonal zur Strahlrichtung bedüsen, wobei der dritte Düsenkranz nach unten in die Rezirkulationsströmung des Gases gerichtet ist, so dass Düsenverschmutzungen vermieden werden.

In der DE 10 2005 042 640 A1 ist ein Verfahren und eine Vorrichtung zur Erzeugung von Synthesegasen aus aschehaltigen Brennstoffen mit Teilchenquenchung und Abhitzegewinnung beschrieben. Der Quenchraum ist senkrecht unterhalb des Vergasungsreaktors angeordnet; dort findet durch Einspritzen von Kühlmittel oder durch Zuführung eines kühlen Gases eine Freiraumquenchung statt, so dass die mitgeführte flüssige Schlacke soweit abkühlt, dass sie nicht mehr an den metallischen Oberflächen der Reaktorwand haften kann.

Die US 4,466,808 offenbart ein Verfahren zur Gaskühlung und Ascheabtrennung mit zwei Kühlzonen, wobei am Gaseintritt des Tauchrohres in einer Düsenringeinheit mit zwei Austrittsrichtungen ein Kühlwasserfilm an der Tauchrohrinnenwand erzeugt wird und gleichzeitig Kühlwasser in einem Winkel von etwa 45° nach unten in den Gasstrom im Tauchrohr eingedüst wird. Das vorgekühlte Gas wird über ein unten gezahnt ausgebildetes Tauchrohr in ein Tauchbad eingeleitet und nach erneuter Umlenkung auf die Tauchbadoberfläche aus dem Quenchraum abgeführt

Aus den EP 0 284 762 A2, DE 10 2005 041 930 A1, DE 10 2006 031 816 A1 und DE 10 2008 035 295 A1 sind Vergasungsverfahren und Vorrichtungen mit Quenchkühlung des Gases bekannt, bei welchem das in den Quenchraum einströmende Gas durch seitliches Einsprühen von Kühlflüssigkeit in den Gasstrom über in unterschiedlichen Höhen angeordnete Düsen gekühlt wird und die dabei abgetrennte Schlacke im Tauchbad gesammelt wird.

Aus der DD 145 860 sind ein Verfahren und eine Vorrichtung zur Behandlung von Reaktionsgasen aus einer Druckvergasung bekannt, die insbesondere auf die gleichzeitige direkte Kühlung und Teilentstaubung zusammen mit einer Wasserdampfsättigung der Gase gerichtet ist. Dazu wird das zu behandelnde Rohgas durch ein Gaszuführungsrohr in eine in einem Kühlmittelbad hängende Glocke eingeleitet und von dieser mittels Austrittsöffnungen auf der Oberseite der Glocke gleichmäßig im Kühlmittelbad verteilt. Um eine Führung der aufsteigenden Gase zu erreichen, sind oberhalb der Austrittsöffnungen frei angeordnete Führungsrohre vorgesehen, oberhalb derer frei angeordnete Hauben ein Wallen der Kühlmitteloberfläche verhindern. Mit dieser Vorrichtung soll unter geringem apparativen und Energieaufwand die Ablagerung von Feststoffen an den Reaktorwandungen vermieden werden.

In der EP 0 127 878 ist ein Verfahren zur Kühlung und Schlackeentfernung aus einem heißen Synthesegas beschrieben, wobei das Heißgas in einer ersten Zone in Kontakt mit einem Kühlmittelfilm auf der Innenwand eines Tauchrohres und in einer zweiten Zone in Kontakt mit einem in den Tauchrohrquerschnitt hinein zerstäubten Kühlmittel gebracht wird, in einer dritten Zone ein Kühlmittelbad durchströmt und in einer vierten Zone erneut in Kontakt mit einem zerstäubten Kühlmittel gebracht wird. Das Tauchrohr weist einen konstanten Querschnitt und einen gezahnten unteren Rand zur gleichmäßigen Verteilung der Gasblasen im Tauchbad auf. Eine für das Verfahren geeignete Vorrichtung weist unterhalb des Heißgaseinlasses ein mittels Kühlmittelfilm gekühltes Tauchrohr, im unteren Drittel des Tauchrohres einen in das Tauchrohrinnere gerichteten Düsenkranz am Tauchrohr, ein Tauchbad und eine außen am Tauchrohr angeordnete, nach unten gerichtete Sprüheinrichtung unterhalb des Rohgasauslasses auf.

Weitere Vorrichtungen und Verfahren zur Behandlung von schlackehaltigen Gasströmen sind aus der DE 42 29 895 A1 und der DE 10 2008 012732 A1 bekannt.

Nachteilig an diesen Lösungen ist, dass die Eigenschaften des gequenchten Gases mit dem Gasdurchsatz in unerwünschter Weise schwanken. Die bekannten Quenchvorrichtungen weisen eine unzureichende Flexibilität auf, so dass die Quenchwirkung (Gaskühlung und Schlackeabtrennung) der Vorrichtungen in unerwünschter Weise vom Gasdurchsatz abhängt.

Ausgehend von diesem Stand der Technik liegt der vorliegenden Erfindung die Aufgabe zugrunde, eine Vorrichtung zur Behandlung eines schlackehaltigen Heißgasstromes zu schaffen, mit der eine annähernd konstante Abtrennung der Schlacke und konstante Gasabkühlung auch bei Volumenstromschwankungen des Heißgasstromes erfolgt, so dass ein Rohgas mit einer von der durchgesetzten Gasmenge weitgehend unabhängigen Qualität bereitgestellt wird.

Weiter soll eine verbesserte Abtrennung der Schlacke während der Abkühlung eines Schlacke mitführenden Heißgasstromes erfolgen, so dass von Schlacke befreites Rohgas mit einer von der erzeugten Gasmenge unabhängigen Qualität bereitgestellt wird. Zugleich sollen Vorrichtung und Verfahren weitere Nachteile beseitigen, die in dem unzureichenden Schutz der Kontaktflächen gegen Schlackeanhaftungen liegen, welche zu Prozessstörungen und häufige Reinigungszyklen führen, so dass sich hohe Standzeiten ergeben, ein geringer Reinigungsaufwand erforderlich ist und eine Mehrfachnutzung des Kühlmittels ermöglicht wird.

Diese Aufgabe wird durch eine Vorrichtung mit den Merkmalen des Anspruchs 1 beziehungsweise durch die Flugstromvergaseranlage mit den Merkmalen des Anspruchs 11 gelöst. Anspruch 12 betrifft die Verwendung der erfindungsgemäßen Vorrichtung. Weiterbildungen der Vorrichtung und der Verwendung sind in den Unteransprüchen ausgeführt.

Eine erfindungsgemäße Vorrichtung zur Behandlung eines schlackehaltigen Heißgasstroms weist in einem Gehäuse einen oben angeordneten Heißgasstrom-Einlass auf, der in ein konzentrisch im Gehäuse vertikal angeordnetes Tauchrohr mündet. Zudem weist die Vorrichtung ein Kühlmittelbad, in das das Tauchrohr mit einem unteren Abschnitt eintaucht, sowie eine oder mehrere Rohgasauslassöffnung, die sich zum Auslass des abgekühlten und von Schlacke befreiten Rohgases an einer seitlichen Gehäusewand befinden kann, auf. Der untere Abschnitt des Tauchrohrs ist dabei im Kühlmittelbad als eine radial erweiterte Gasverteilerglocke ausgebildet, und zwar durch eine im Wesentlichen kegelförmige Mantelfläche mit sich nach unten erweiterndem Querschnitt. Diese Mantelfläche weist eine Vielzahl von Gasdurchtrittsöffnungen auf, die über den Umfang der Gasverteilerglocke verteilt sind. Die Abmessungen der Gasdurchtrittsöffnungen nehmen mit der Eintauchtiefe der Glocke im Kühlmittelbad zu.

Durch die kegelförmige Mantelfläche der Gasverteilerglocke, welche den Strömungsquerschnitt des Tauchrohres für das Heißgas im Gasaustrittsbereich aus dem Tauchrohr erweitert, und durch die Vielzahl der Gasdurchtrittsöffnungen in der Mantelfläche, die annähernd gleichmäßig über den Umfang der Gasverteilerglocke verteilt sind und deren Durchmesser reihenweise gestaffelt von oben nach unten zunehmen, werden konstante Durchströmungsbedingungen unabhängig vom Strömungsweg des Heißgases geschaffen. Vorteilhaft kann so durch die Gasdurchtrittsöffnungen eine gleichmäßige Gasverteilung im Kühlmittelbad und wegen der hohen Oberfläche der erzeugten Gasblasen ein guter Wascheffekt gefördert werden. Dieser bleibt durch die kegelförmige Ausbildung der Gasverteilerglocke und die mit der Eintauchtiefe zunehmende Größe der Gasdurchtrittsöffnungen in der Gasverteilerglocke auch bei unterschiedlichen Heißgasvolumenströmen annähernd konstant, denn infolge der sich nach unten erweiternden Mantelfläche der Gasverteilerglocke steht bei höherem Gasdurchsatz und dadurch absinkendem Kühlmittelniveau in der Gasverteilerglocke ein größerer Gesamtöffnungsquerschnitt der Gasdurchtrittsöffnungen auf dem Umfang zur Verfügung.

Ferner wird durch die mit der Tiefe zunehmende Öffnungsweite der Gasdurchtrittsöffnungen und dadurch abnehmende Drosselwirkung in vorteilhafter Weise erreicht, dass damit der mit zunehmender Eintauchtiefe anwachsende Druckverlust beim Durchströmen des Kühlmittelbades kompensiert wird, so dass nahezu unabhängig vom Gasdurchsatz ein konstanter Strömungswiderstand des Tauchbades erzielbar ist. Die Summe der Gasdruckverluste beim Durchströmen der Durchtrittsöffnungen und des Kühlmittelbads wird so durch die Abmessungszunahme der Durchtrittsöffnungen nach unten annähernd konstant gehalten.

Der in Bezug auf die Gasverteilerglocke relativ reduzierte Durchmesser des Tauchrohres, wobei die Relativreduzierung des Tauchrohrdurchmessers erst durch die sich erweiternde Gasverteilerglocke sinnvoll ermöglicht wird, besitzt einen wesentlichen Vorteil gegenüber bekannten Varianten mit konstantem Tauchrohrdurchmesser. Aufgrund der größeren Oberfläche des Kühlmittelbades zwischen Gehäuse und Tauchrohr sind die Oberflächenturbulenzen geringer, so dass Schwankungen im Kühlmittelniveau weitaus geringer auftreten und auch der Anteil des mit dem gekühlten Rohgas mitgerissenen Kühlmittels und somit der Kühlmittelverbrauch für das Tauchquenchen reduzierbar ist.

So kann eine annähernd konstante Abtrennung der Schlacke und konstante Gasabkühlung auch bei Volumenstromschwankungen des Heißgasstromes erfolgen und ein Rohgas mit einer von der durchgesetzten Gasmenge weitgehend unabhängigen Qualität bereitgestellt werden.

In einer Ausführungsform weist das Tauchrohr der erfindungsgemäßen Vorrichtung an einem oberen Ende eine Kühlmittelringkammer auf, mittels derer ein Kühlmittelfilm auf der Innenwandung des Tauchrohres erzeugt wird. Dabei ist das Tauchrohr über seine gesamte Länge doppelwandig ausgeführt, wobei zwischen einem Innenrohr und einem Außenrohr ein Ringspalt vorhanden ist, der mit der Kühlmittelringkammer verbunden ist. Dabei ist eine mit dem Ringspalt verbundene Kühlmittelzuleitung an einem unteren Abschnitt des Tauchrohrs angeordnet.

Durch die doppelwandige Ausführung des Tauchrohres über seine gesamte Länge, wobei der Ringspalt mit der Kühlmittelringkammer zur Erzeugung des Kühlmittelfilms auf der Innenwandung des Innenrohres verbunden ist, während die mit dem Ringspalt verbundene Kühlmittelzuleitung an dem unteren Abschnitt des Tauchrohrs angeordnet ist, wird eine Zwangskühlung des Tauchrohres und eine bessere thermische Entkopplung zwischen dem Heißgasstrom im Tauchrohr und dem gekühlten Rohgas nach der Tauchquenchung erzielt. In vorteilhafter Weise wird das thermisch hoch belastete Tauchrohr durch die vorgeschlagene Lösung intensiver gekühlt als allein mit dem aus dem Stand der Technik bekannten Kühlmittelfilm, wodurch der am Gaseintritt erzeugte Kühlmittelfilm auf der Tauchrohrinnenfläche weniger schnell verdampft und sich daher im Wesentlichen über die volle Tauchrohrlänge erstreckt, so dass Schlackeanhaftungen am Tauchrohr wesentlich reduziert werden.

In einer bevorzugten Variante sind die Gasdurchtrittsöffnungen gleichförmig, insbesondere kreisförmig ausgebildet und annähernd gleichmäßig über den Umfang der Gasverteilerglocke verteilt.

Ein Verhältnis des größten Durchmessers der Gasverteilerglocke bezogen auf den Durchmesser des Tauchrohres kann in einem Bereich von 1,5 bis 3 liegen.

Ferner kann vorgesehen sein, dass die Vorrichtung einen Sammeltrichter aufweist, der sich von einem Schlackeabzug am Boden des Gehäuses kegelförmig bis zu der Innenwand des Gehäuses erstreckt. Die Gasverteilerglocke und der Sammeltrichter sind dabei so zueinander angeordnet, dass ein unterer Rand der Gasverteilerglocke in den Sammeltrichter hineinragt.

Eine weitere Ausführungsform der erfindungsgemäßen Vorrichtung bezieht sich auf eine Kombination der Vorquenchung mittels des Kühlmittelfilms, der Tauchquenchung im Kühlmittelbad mit einer Freiraumquenchung sowohl im Tauchrohr als auch in einem Zwischenraum zwischen dem Tauchrohr und dem Gehäuse. Diese Freiraumquenchung wird mittels zweier oder mehrerer Sprüheinheiten ausgeführt, die jeweils mit einer Kühlmittelzuleitung von außerhalb des Gehäuses fluidisch verbunden und konzentrisch um das Tauchrohr angeordnet sind. Die Sprüheinheiten sind in die Gasströmung gerichtet, wobei eine erste Sprüheinheit in das Tauchrohrinnere und eine zweite Sprüheinheit in den Zwischenraum gerichtet ist.

Vorteilhafte Ausführungsformen der Sprüheinheiten beziehen sich darauf, dass die erste Sprüheinheit zumindest einen Düsenring, vorzugsweise zwei Düsenringe in einem oberen Drittel des Tauchrohrs umfasst. Die Düsenringe sind um den Außenumfang des Tauchrohres angeordnet und weist Düsen auf, die sich durch die Doppelwandung in das Tauchrohr hinein erstrecken. Die Düsen der Düsenringe sind radial nach innen gerichtet und können um einen Winkel, vorzugsweise in einem Bereich von 0° bis 30°, nach unten in Bezug auf die Horizontale geneigt sein.

Die zweite Sprüheinheit kann ebenfalls als Düsenring ausgebildet sein, der in einem oberen Bereich des Zwischenraumes angeordnet ist und dessen Hauptsprührichtung nach unten weist, so dass die Innenwand des Gehäuses und das Außenrohr durch den Düsenring nahezu vollständig mit Kühlmittel benetzt werden können.

Ferner kann zumindest das Kühlmittel für die erste Sprüheinheit und das Kühlmittel für die zweite Sprüheinheit von verschiedenen Kühlmittelversorgungseinrichtungen bereitgestellt werden, wobei das Kühlmittel für die zweite Sprüheinheit kleinere Partikel enthält als das Kühlmittel für die erste Sprüheinheit.

Im Falle von Wasser als Kühlmittel, kann so für die erste Sprüheinheit Prozesswasser ohne vorherige Behandlung und für die zweite Sprüheinheit Gaskondensate und/oder Grauwasser verwendet werden.

Durch die Kombination der Vorquenchung durch den Kühlmittelfilm, der Freiraumquenchung im Tauchrohr, der Tauchquenchung im Kühlmittelbad und der nochmaligen Freiraumquenchung im Gassammelraum beziehungsweise Zwischenraum nach der Tauchquenchung kann vorteilhaft die Gasquenchung auf die Gaseigenschaften flexibel abgestimmt werden. Daneben wird durch die Kühlmittelringkammer zur Erzeugung des Kühlmittelfilms und die Sprüheinheiten sichergestellt, dass die gesamte Kontaktfläche des Quenchraumes mit Kühlflüssigkeit benetzt ist und damit Schlackeanlagerungen nahezu vollständig oder sogar völlig vermeidbar sind.

Eine weitere Ausführungsform bezieht sich darauf, dass die Rohgasauslassöffnung in einem oberen Drittel des Gehäuses angeordnet ist. Für den Fall, dass mehrere Auslässe vorgesehen sind, können diese auf verschiedenen Höhen im oberen Drittel des Gehäuses angeordnet sein.

In einer weiteren bevorzugten Ausbildung der Vorrichtung kann ein Durchmesser des Tauchrohrs dem Zwei- bis Fünffachen des Durchmessers des Heißgas-Einlasses entsprechen.

So ist die erfindungsgemäße Vorrichtung generell zur Behandlung eines schlackehaltigen Heißgasstromes somit dazu geeignet, einer Einrichtung nachgeschaltet zu werden, die den schlackehaltigen Heißgasstrom erzeugt. Dies kann insbesondere ein Flugstromvergaser sein, so dass eine Flugstromvergaseranlage neben dem Flugstromvergaser stromabwärts dazu die erfindungsgemäße Vorrichtung umfasst. Dabei wird der Einlass für den Heißgasstrom der Vorrichtung mit einem Heißgasaustritt des Flugstromvergasers fluidisch verbunden.

Eine Ausführungsform eines Verfahrens zur Behandlung eines schlackehaltigen Heißgasstroms mit einer vom Gasdurchsatz nahezu unabhängigen Quenchwirkung, umfassend Gaskühlung und Schlackeabtrennung, bezieht sich auf ein Verfahren, bei dem ein Heißgasstrom über einen Einlass in ein Tauchrohr in einem Gehäuse einströmt, wobei am oberen Ende des Tauchrohres ein Kühlmittelfilm auf der Innenwandung des Tauchrohres erzeugt wird, und der entlang des Tauchrohrs strömende Heißgasstrom im Kontakt mit dem Kühlmittelfilm auf der Innenwandung des Tauchrohres vorgekühlt wird, welches mit einem unteren Abschnitt in ein Kühlmittelbad eintaucht. Eine anschließende Tauchquenchung erfolgt erfindungsgemäß durch das Dispergieren des durch das Tauchrohr in das Kühlmittelbad eingeleiteten vorgekühlten Heißgasstroms im Kühlmittelbad mittels Gasdurchtrittsöffnungen in einer kegelförmigen Gasverteilerglocke, die sich an das Tauchrohr anschließt, wobei die Abmessungen der Gasdurchtrittsöffnungen mit der Eintauchtiefe zunehmen.

Vorteilhaft kann durch die doppelwandige Ausführung des Tauchrohrs die Wandung des Tauchrohrs von Innen gekühlt werden, wodurch nicht nur das Tauchrohr selbst, sondern auch der darauf gebildete Kühlmittelfilm gekühlt wird, so dass weniger oder keine Schlacke an der Tauchrohrinnenwand abgeschieden wird. Ferner erfolgt die Zufuhr des Kühlmittels an einem unteren Abschnitt des Tauchrohrs, so dass das Kühlmittel zunächst durch das aufwärts Strömen durch den zwischen dem Innenrohr und dem Außenrohr des Tauchrohres gebildeten Ringspalt die Innenkühlung über die gesamte Länge des Tauchrohrs bereitstellt und dann nach dem Passieren des Ringspalts in die Kühlmittelringkammer am oberen Ende des Tauchrohrs eintritt und zur Speisung des Kühlmittelfilms verwendet wird. Durch die Verringerung der Schlackeablagerungen an der Tauchrohrinnenwand können hohe Standzeiten bewirkt werden und es ist ein geringer Reinigungsaufwand erforderlich.

Weiterbildungen des Verfahrens beziehen sich darauf, dass der Heißgasstrom neben der Vorquenchung durch den Kühlmittelfilm zusätzlich durch eine Flashquenchung durch Einsprühen von Kühlmittel während des Durchströmens des Tauchrohres gekühlt wird. Schließlich wird der aus dem Kühlmittelbad austretende Rohgasstrom in einem weiteren Freiraumquenchschritt durch Einsprühen von Kühlmittel gekühlt.

Im Folgenden soll die vorgeschlagene Lösung beispielhaft erläutert werden.

Die Figuren sind lediglich als eine schematische und beispielhafte Darstellung einer besonders vorteilhaften Ausführungsform der Erfindung zu verstehen. Dabei zeigt:
**Fig. 1** eine Seitenschnittansicht einer erfindungsgemäßen Vorrichtung zum Tauchquenchen eines Heißgasstromes,
**Fig. 2** eine Seitenschnittansicht einer erfindungsgemäßen Vorrichtung in Kombination mit weiteren Quencheinrichtungen.

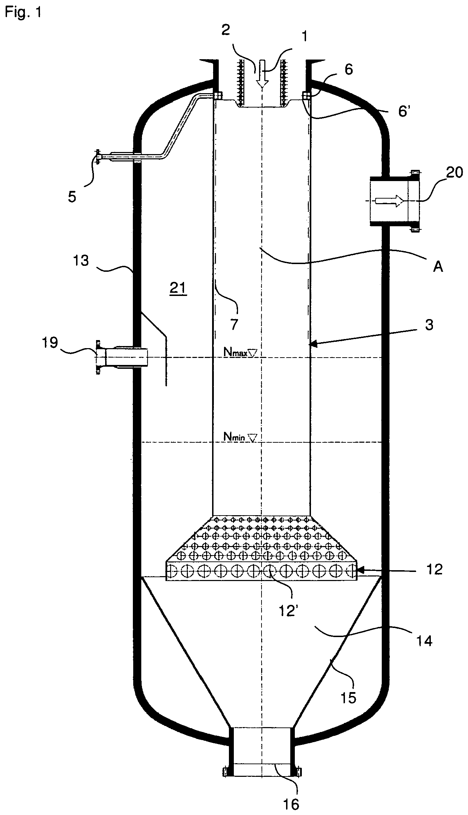

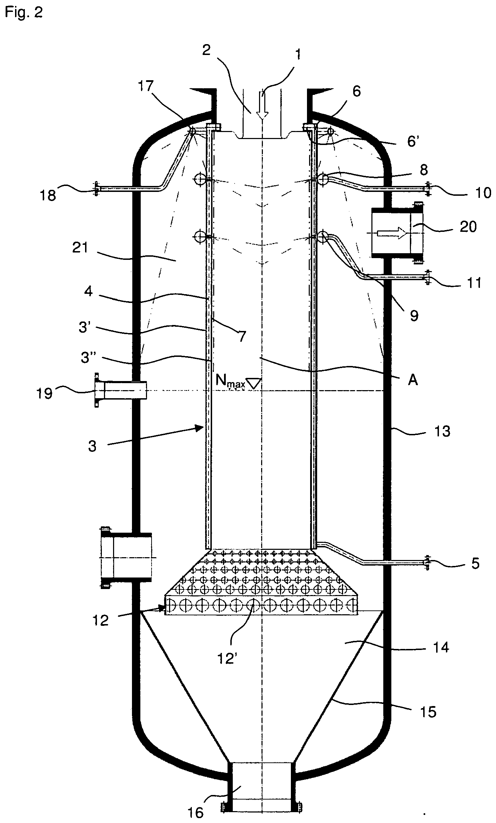

Die in den Figuren 1 und 2 dargestellte Vorrichtung zur Behandlung eines schlackehaltigen Heißgasstromes weist ein Gehäuse 13 mit einem oben angeordneten Einlass 2 für einen Heißgasstrom 1 auf, der in ein konzentrisch zum Gehäuse vertikal angeordnetes Tauchrohr 3 mündet. Der Einlass 2 für das schlackehaltige Heißgas endet mit einer Schlackeabtropfkante innerhalb des oberen Abschnittes des Tauchrohres 3. Der Durchmesser des Tauchrohres 3 kann das Zwei- bis Fünffache des Durchmessers des Einlasses 2 betragen.

Am oberen Ende des Tauchrohres 3, d.h. an der Gaseintrittsöffnung des Tauchrohres 3, ist eine bekannte Kühlmittelringkammer 6 angeordnet, die auf ihrer Unterseite eine umfängliche Auslassöffnung 6' aufweist, die sich entlang der Innenwand des Tauchrohres 3 erstreckt und der Aufrechterhaltung eines an der Innenwand des Tauchrohrs 3 nach unten abfließenden, vorzugsweise geschlossenen Kühlmittelfilms 7 dient.

Vorteilhaft wird die Kühlmittelringkammer 6 durch eine kragenförmige Erweiterung des Tauchrohrs 3 nach innen gebildet, indem sich an das Tauchrohr 3 eine stirnseitige Kragenfläche anschließt, die zusammen mit einem abgewinkelten inneren Zylinderabschnitt die Kühlmittelringkammer 6 bis zur Auslassöffnung 6' begrenzt. Die Auslassöffnung 6' kann nahezu durchgehend umlaufend sein oder kann aus einer Mehrzahl von über den Umfang des Tauchrohres 3 verteilten Öffnungen gebildet sein.

Zur Speisung der Kühlmittelringkammer 6 mit Kühlmittel ist eine radial durch das Gehäuse 13 zum Tauchrohr 3 geführte Kühlmittelzuleitung 5 an der Kühlmittelringkammer 6 angeordnet. In Fig. 1 mündet die Kühlmittelleitung 5 direkt in die Kühlmittelringkammer 6.

In der in Fig. 2 gezeigten Ausführungsform der Vorrichtung ist das Tauchrohr 3 über seine gesamte Länge doppelwandig ausgeführt, wobei die Doppelwandung durch ein Innenrohr 3' und ein Außenrohr 3" gebildet ist, die konzentrisch angeordnet sind und einen Ringspalt 4 einschließen, der am oberen Ende mit der Kühlmittelringkammer 6 derart in Verbindung steht, dass aus dem Ringspalt 4 austretendes Kühlmittel in die Kühlmittelringkammer 6 gelangt. Der Ringspalt 4 ist wiederum mit der Kühlmittelzuleitung 5 verbunden, die nun an einem unteren Abschnitt des Tauchrohres 3 angeordnet ist.

Wie beiden Figuren anhand des Kühlmittelniveaus N zu entnehmen, taucht das Tauchrohr 3 mit seinem unteren Abschnitt in ein Kühlmittelbad 14 ein. Am unteren Ende des Tauchrohres 3 ist eine Gasverteilerglocke 12 mit sich im Wesentlichen stetig nach unten kegelförmig erweiterndem Querschnitt angeordnet. Der Mantel muss nicht auf seiner gesamten Höhe kegelförmig gestaltet sein, zur besseren Anpassung der Strömungsverhältnisse an den Quenchprozess kann es beispielsweise auch vorteilhaft sein, die Gasverteilerglocke 12 mit einem zylindrischen Mantelabschnitt an der offenen Unterseite auszustatten, wie in der Zeichnung dargestellt. Weiterhin kann anstelle einer geraden unteren Mantelkontur auch eine wellenförmige oder zahnförmige Kontur vorteilhaft sein.

Der größte Durchmesser der Gasverteilerglocke 12 bezogen auf den Durchmesser des Tauchrohres 3 liegt im Bereich 1,5 bis 3, vorzugsweise zwischen 1,5 und 2.

Die Gasverteilerglocke 12 weist in ihrem kegelstumpfförmigen Mantel eine Vielzahl von Gasdurchtrittsöffnungen 12' auf, die in mehreren übereinander angeordneten horizontalen Reihen vorzugsweise gleichmäßig über den Umfang verteilt sind. Die Gasdurchtrittsöffnungen 12' sind gleichförmig gestaltet, vorzugsweise kreisförmig. Ebenso sind von der Kreisform abweichende Öffnungen möglich, beispielsweise elliptische oder rechteckige Öffnungen mit abgerundeten Ecken oder Öffnungen mit unstetigen Konturen, die die Blasengröße und den Blasenabriss beeinflussen. Weiterhin können auch geformte und gestanzte Bleche für die Mantelfläche verwendet werden, wobei die Gasdurchtrittsöffnungen beispielsweise trichterförmig oder düsenartig ausgebildet sind.

Mit der Eintauchtiefe variieren die Abmessungen der Gasdurchtrittsöffnungen 12'. Der Durchmesser der Gasdurchtrittsöffnungen 12' ist oben am Übergang zum Tauchrohr 3 kleiner als der Durchmesser der Gasdurchtrittsöffnungen 12' an dem vom Tauchrohr 3 abgewandt liegenden, nach unten weisenden Rand der Gasverteilerglocke 12, wobei die reihenweise Größenzunahme der Gasdurchtrittsöffnungen 12' in die Tiefe des Kühlmittelbades 14 derart gewählt ist, dass die Summe der Gasdruckverluste beim Durchströmen der Gasdurchtrittsöffnungen 12' und des Kühlmittelbades 14 annähernd konstant bleibt.

Die Vorrichtung ist im Bodenbereich derart gestaltet, dass der untere Rand der Gasverteilerglocke 12 in einen Sammeltrichter 15 für die aus dem Heißgas abgetrennte Schlackepartikel hineinragt, der sich im Kühlmittelbad 14 von einem am Gehäuseboden angeordneten Schlackeabzug 16 kegelförmig bis zur Innenwand des Gehäuses 13 erstreckt.

Das Gehäuse 13 weist ferner einen Kühlmittel-Überlauf 19 auf, der in Höhe eines maximalen, für die Tauchquenchung erforderlichen Kühlmittelniveaus Nₘₐₓ angeordnet ist. Im Falle von Wasser als Kühlmittel kann Prozesswasser ohne vorherige Behandlung für den Kühlmittelfilm 7 und das Kühlmittelbad 14 verwendet werden.

Das im Quencher nicht verdampfte Überschusswasser verlässt das Gehäuse 13 am Überlauf 19 und wird aufbereitet. Mit der Entfernung der Feststoffanteile ist das Wasser wieder einsetzbar und wird als Grauwasser bezeichnet und mehrfach für das Quenchen genutzt. Prozesswasser kann ohne vorherige Behandlung für den Kühlmittelfilm 7 und das Kühlmittelbad 14 verwendet werden.

Die erfindungsgemäße Vorrichtung weist weiterhin einen zwischen Gehäuse 13 und Tauchrohr 3 gebildeten Zwischenraum 21 für das gequenchte Gas als Sammelraum oberhalb des Kühlmitteltauchbades 14 und einen Rohgasauslass 20 für das abgekühlte und von Schlacke weitgehend befreite Rohgas auf, der üblicherweise im oberen Drittel des Gehäuses 13 angeordnet ist. Es kann vorgesehen sein, dass die Vorrichtung mehr als einen Rohgasauslass 20 aufweist. Sind zwei oder mehr Rohgasauslässe vorgesehen, so können diese zwecks Anpassung an die Heißgaseigenschaften auf verschiedenen Höhen im oberen Drittel des Gehäuses 13 angeordnet sein.

Zur Vermeidung von Ablagerungen von Bestandteilen der Asche, die hauptsächlich CaCO₃-Bestandteiie sowie Alkalisublimate sind, die erfahrungsgemäß vor allem an trockenen heißen Flächen anhaften, kann, wie in Fig. 2 dargestellt, über eine vorzugsweise wieder als Düsenring 17 ausgebildete weitere Sprüheinheit im oberen Abschnitt des das Tauchrohr 3 umgebenden Zwischenraumes 21 über dem Kühlmittelbad 14 zusätzlich Kühlmittel eingesprüht werden. Die ringförmig um das Tauchrohr 3 angeordneten Düsen weisen einen breiten Sprühkegel auf, wobei die Hauptsprührichtung nach unten weist. Neben dem Effekt des Feuchthaltens der den Zwischenraum 21 begrenzenden Kontaktflächen von Gehäuse 13, Tauchrohr 3 und weiteren Einbauten, wie beispielsweise der Kühlmittelzuleitungen 5,10,11, wird eine zusätzliche Zerstäubung von Kühlmittel im Rohgasstrom erreicht, wodurch der Wasch- und Kühleffekt nochmals verbessert wird. Dem Düsenring 17 ist ebenfalls eine Kühlmittelzuleitung 18 zugeordnet.

Anstelle des einzelnen Düsenringes 17, welcher das obere Ende des Tauchrohrs 3 umgibt, ist es auch möglich, mehrere oberhalb des Kühlmittelbades 14 angeordnete Düsenringe oder von der Ringanordnung abweichende Düsengruppen mit Einzeldüsen zu installieren, um den Zwischenraum 21 vollständig zu besprühen.

Die erfindungsgemäße Vorrichtung ist insbesondere zur Abkühlung eines schlackehaltigen Heißgasstromes 1 und zur Abtrennung der Schlacke aus dem Heißgasstrom 1 von Vergaseranlagen für kohlenstoffhaltige Brennstoffe vorgesehen, beispielsweise Flugstromvergaseranlagen von Biomassevergasern. Die erfindungsgemäße Vorrichtung ist dazu stromabwärts dem Flugstromvergaser nachgeordnet und mit diesem fluidisch verbunden, wobei die Anordnung der Vorrichtung vorzugsweise direkt an einem Heißgasaustritt unterhalb einer Brennkammer des Flugstromvergasers erfolgt.

Aus einem der Vorrichtung vorgeschalteten Reaktionsraum des Flugstromvergasers wird dabei Heißgas in den darunter befindlichen Quenchraum geleitet. Dort erfolgen eine mehrstufige Kühlung des Heißgases und eine Abtrennung der Schlacke aus dem Gas, wobei eine Kombination von Vor- und gegebenenfalls Flashquenchung im Tauchrohr, Tauchquenchung im Kühlmittel-Tauchbad und gegebenenfalls erneute Freiraumquenchung im Rohgassammelraum Anwendung findet.

In den beiden in den Figuren gezeigten Ausführungsformen wird der schlackehaltige Heißgasstrom 1 zunächst durch den Einlass 2 vertikal nach unten in das filmgekühlte Tauchrohr 3 geführt. Dort erfolgt ein Vorquenchen des zugeführten Heißgasstromes 1 im Kontakt mit dem Kühlmittelfilm 7, der an der Innenwandfläche des Tauchrohrs 3 erzeugt wird. Der Kühlmittelfilm 7 bewirkt neben der Vorquenchung des zugeführten Heißgasstromes 1 einen verbesserten Abtransport der Schlackepartikel in das Kühlmittelbad 14, indem eine Ablagerung von Schlacke an der Tauchrohrinnenwand reduziert bzw. vermieden wird.

Wird eine wie in Fig. 2 gezeigten Vorrichtung mit einem doppelwandigen Tauchrohr 3 zur Behandlung eines schlackehaltigen Heißgasstroms verwendet, wird der auf der Innenseite des Tauchrohres 3 gebildete Kühlmittelfilm 7 durch die Innenkühlung des Tauchrohres 3 gekühlt, die durch das durch den Ringspalt 4 zugeführte Kühlmittel, das den Kühlmittelfilm 7 speist, bereitgestellt wird, wodurch der schlackehaltige Heißgasstroms 1 im Kontakt mit dem Kühlmittelfilm 7 abgekühlt wird. Da die Kühlmittelzufuhr für den Kühlmittelfilm 7 durch den Ringspalt 4 erfolgt, wird die Tauchrohrwandung über die gesamte Höhe zwangsgekühlt. Dadurch ist der im Heißgasstrom 1 verdampfende Kühlmittelanteil des Kühlmittelfilms 7 wesentlich geringer, als aus dem Stand der Technik bekannt ist, und der Kühlmittelfilm 7 bleibt nahezu über der gesamten Tauchrohrlänge erhalten. Weiterhin kann durch die intensive Tauchrohrkühlung der Aufwand für den thermischen Schutz des umgebenden Gehäuses 13 zumindest verringert werden. Der im Inneren des Tauchrohrs erzeugte stabile Kühlmittelfilm 7 bewirkt neben einer Vorquenchung des zugeführten Heißgasstromes 1 einen verbesserten Abtransport der Schlackepartikel, indem wegen des lückenlosen Kühlmittelfilms 7 eine Ablagerung von erstarrender und erstarrter Schlacke an der Tauchrohrinnenwand reduziert bzw. vermieden wird.

In der in Fig. 2 gezeigten Ausführungsform der erfindungsgemäßen Vorrichtung findet innerhalb des Tauchrohrs 3 nicht nur ein Vorquenchen des Heißgasstromes 1 mittels des Kühlmittelfilms 7 statt, vielmehr bildet das Tauchrohr 3 ferner einen zylindrisch gestalteten Flashquenchraum innerhalb der Vorrichtung. So wird mit dem Einsprühen von Kühlmittel während des Durchströmens des Tauchrohres 3 wird einer Flashquenchung des Heißgasstroms 1 erzielt.

Oberhalb des Niveaus N des im Gehäuse 13 vorhandenen Kühlmittelbades 14 ist in Fig. 2 eine erste Sprüheinheit im oberen Drittel des Tauchrohres 3 angeordnet, wobei diese Sprüheinheit einen oberen Düsenring 8 am Außenumfang des Tauchrohres 3 und vorzugsweise zusätzlich mindestens einen unteren Düsenring 9 umfasst und wobei über den Umfang der Düsenringe 8, 9 verteilte Düsen das im vorliegenden Beispiel doppelwandige Tauchrohr 3 durchdringen und radial ins Tauchrohrinnere gerichtet sind. Die Düsenringe 8, 9 werden über Kühlmittelzuleitungen 10, 11 von außen mit Kühlmittel gespeist.

Die Bezeichnung "Düse" bezieht sich dabei im einfachsten Fall auf eine röhrenförmige Vorrichtung mit definierter Innenkontur, mit der Kühlmittel bzw. üblicherweise verwendetes Quenchwasser in das Innere des Tauchrohres 3 in einer definierten Richtung mit einem vorbestimmbaren Druck eingesprüht wird. Die Düsenringe 8,9 erzeugen vertikal übereinander liegende radial nach innen zur Achse A gerichtete Sprühvorhänge über den Innenquerschnitt des Tauchrohrs 3. Die Düsen können zur Erzeugung eines horizontalen Sprühvorhangs annähernd waagerecht ausgerichtet sein, sie können aber auch, wie in der Figur durch die Strich- Punkt- Punkt- Linien angedeutet, in ihrer Strahlrichtung bezüglich der Horizontalen nach unten im Winkel von 10° bis 30° geneigt sein. Anstelle der Düsenringe 8,9 können auch anders ausgebildete Zerstäuber als Sprüheinheiten eingesetzt werden, sofern sie den Querschnitt des Heißgasstromes 1 annähernd vollständig mit Kühlmittelnebel durchsetzen.

Durch das Zusammentreffen des schlackehaltigen Heißgasstromes 1 mit dem fein verteilten Kühlmittel erfolgt eine sehr schnelle Abkühlung (Flashquenchung) und Sättigung des Gases mit dem als Kühlmittel eingesetzten Wasser beim Passieren der Sprühvorhänge. Die in dem doppelwandigen Tauchrohr 3 mittels der Sprüheinheiten durchgeführte Flashquenchung entspricht einer Freiraumquenchung und lässt die Schlacketropfen im Heißgasstrom 1 nicht nur abkühlen und erstarren, sondern bewirkt auch gleichzeitig eine Agglomeration der Schlacketeilchen, unterstützt durch den an der Innenwandung des Innenrohrs 3' anhaftenden Kühlmittelfilm 7, so dass eine bessere Abscheidung der Schlacketeilchen im Kühlmittelbad 14 erzielt werden kann.

Der vor- und gegebenenfalls flashgequenchte Gasstrom wird zusammen mit den im Gasstrom befindlichen erstarrenden oder bereits erstarrten Schlacketeilchen in das Kühlmittelbad 14 eingeleitet und dort tauchgequencht. Der vorgekühlte Heißgasstrom 1 wird mit Hilfe der Gasdurchtrittsöffnungen 12' mit von der Eintauchtiefe abhängigen Abmessungen in der kegelförmigen Gasverteilerglocke 12, dargestellt in beiden Figuren, am unteren Ende des Tauchrohres 3 im Kühlmittelbad 14 dispergiert, wobei Turbulenzen im Kühlmittelbad 14 entstehen, die den Wascheffekt verstärken. Während die Strömungsrichtung des eingeleiteten Gases an der Gasverteilerglocke 12, die sich an das untere Ende des Tauchrohres 3 anschließt, umgelenkt wird und durch das Kühlmittelbad 14 nach oben in einen zwischen Tauchrohr 3 und Gehäuse 13 gebildeten Zwischenraum 21 und zu mindestens einem Rohgasauslass 20 strömt, sinkt die durch den Wascheffekt und die Strömungsrichtungsumkehr aus dem Gas abgetrennte Schlacke nach dem Prinzip der Dichtetrennung im Schwerkraftfeld ab. Der Sammeltrichter 15 leitet die erstarrten Schlackeagglomerate einem Schlackeabzug 16 am tiefsten Punkt im Boden des Gehäuses 13 zu, so dass sie dort chargenweise oder kontinuierlich abgezogen bzw. ausgeschleust werden kann.

Die in die Gasverteilerglocke 12 eingebrachten Gasdurchtrittsöffnungen 12' fördern eine gute Gasverteilung im Kühlmittelbad 14, und tragen damit zu einem guten Wascheffekt bei. Dieser bleibt durch die Anordnung der in der Größe variierenden, nach oben kleiner werdenden Gasdurchtrittsöffnungen 12', die nicht zwingend kreisförmig sein müssen, sondern auch andere Konturen aufweisen können, in der Gasverteilerglocke 12 auch bei unterschiedlichen Heißgasvolumenströmen annähernd konstant aufgrund der Kompensation des in der Tiefe des Kühlmittelbades 14 zunehmenden Druckverlustes durch den geringeren Druckverlust der größeren Gasdurchtrittsöffnungen 12'. Bei geringeren Heißgasdurchsätzen werden die oberflächennahen kleineren Gasdurchtrittsöffnungen 12' mit höherem Druckverlust durchströmt und kleine Gasblasen im Kühlmitteltauchbad 14 erzeugt, bei höheren Gasdurchsätzen werden auch die tiefer angeordneten größeren Gasdurchtrittsöffnungen 12' vom Gas durchströmt, die geringere Druckverluste bewirken.

Der von Schlacke befreite Rohgasstrom sammelt sich im Zwischenraum 21 und verlässt dann durch den Rohgasauslass 20 die Vorrichtung. Zwei oder mehrere Rohgasauslässe 20 auf verschiedenen Höhen im oberen Drittel des Gehäuses 13 ermöglichen auch eine variable Nutzung des Gehäuses 13 für verschiedene Quenchvarianten. Im Zwischenraum 21 kann, wie Fig. 2 zeigt, das aus dem Tauchbad 14 austretende Rohgas durch Einsprühen von Kühlmittel mittels des Düsenrings 17 nochmals gekühlt und dabei auch restliche Schlackepartikel ausgewaschen werden.

Die abgetrennte Schlacke wird durch den Schlackeabzug 16 entfernt. Der Sammeltrichter 15 schützt das Gehäuse vor Schlackeablagerungen und Verschleiß. Der Kühlmittel-Überlauf 19 hält ein für die Gasreinigung und Restkühlung des Gases erforderliches Kühlmittelniveau N im Gehäuse 13 aufrecht.

Aufgrund der mit einer Vorrichtung gemäß einer im Zusammenhang mit Fig. 2 beschriebenen Ausführungsform geschaffenen lückenlosen Benetzung der Kontaktflächen, der intensiven Kontaktflächenkühlung und der Mehrstufigkeit des Quenchens kann die Vorrichtung mit hohen Standzeiten und geringem Reinigungsaufwand betrieben werden, während gleichzeitig durch die durch das Tauchbad getrennte Vor-/Flashquenchung im Tauchrohr und die Bedüsung im Zwischenraum 21 eine Mehrfachnutzung des mit Feststoffanteilen beladenen Kühlmittels bzw. Wassers in der Vor-/Flashquenchung möglich ist, wobei der Kühlmittel-/Wasserverbrauch in Abhängigkeit einer erzeugten Gasmenge gesteuert werden kann.

Zur vollständigen Benetzung des Gehäuses 13 erfolgt der Betrieb des Düsenringes 17 oder der anderen Sprüheinheiten vorzugsweise mit einer Kühlmittelmenge zwischen 10 und 100 m³/h, einer Düsenaustrittsgeschwindigkeit von 2 bis 10 m/s und einem Tropfenspektrum von 100 bis 3000 µm.

Dieses Ausführungsbeispiel basiert auf dem Einsatz der Erfindung in Verbindung mit einem Kohlenstaubdruckvergaser bei einer Vergaserleistung von 80 000 Nm³/h (trocken). In diesem Beispiel können die am Tauchrohr 3 angeordneten Düsenringe 8,9 und die durch das doppelwandige Tauchrohr 3 geführten Düsen mit einem Kühlmittelstrom von 30 bis 50 m³/h gespeist.

Mit einer Auswahl bzw. Anpassung des Kühlmitteldurchsatzes einzelner oder mehrerer der beschriebenen Einbauten in der Vorrichtung ist eine weit reichende Anpassung an eine Freiraum- oder Tauchquenchung bzw. eine Kombination davon möglich.

Ferner kann für die verschiedenen Düsengruppen in Abhängigkeit von der erforderlichen Tropfengröße und der Austrittsgeschwindigkeit Kühlmittel bzw. Wasser mit unterschiedlicher Qualität verwendet werden. Für die Innenkühlung des Tauchrohres 3 und die Beschickung des Düsenringes 17, wo das Wasser besonders fein verdüst wird, muss Wasser eingesetzt werden mit einem niedrigen Feststoffanteil und geringer Feststoffpartikelgröße. Die Wasserqualität für die Flashquenchung im Tauchrohrinneren kann geringer sein. Während zur Bedüsung des Zwischenraums 21 Gaskondensate und Grauwasser eingesetzt werden können, ist zur Ausbildung des Wasserfilms der Einsatz von Prozesswasser ohne vorherige Behandlung ausreichend. Es ist daher vorteilhaft, wenn zumindest das Kühlmittel für die erste Sprüheinheit/Tauchrohr und das Kühlmittel für die zweite Sprüheinheit von verschiedenen Kühlmittelversorgungseinrichtungen bereitgestellt werden. Da der Wasserverbrauch an den einzelnen Quencheinrichtungen abhängig ist vom durchgesetzten Gasstrom und dessen Feststoffbeladung, ist eine Regelung des Wasserverbrauches an den einzelnen Verbrauchern sinnvoll. Die verdampfte Wassermenge innerhalb des Quenchers ist thermodynamisch bestimmbar. Die eingesetzte Wassermenge sollte etwa 20% größer sein als die verdampfte Wassermenge. Eine entsprechende Steuerung der Wasserzufuhr zu den Quencheinrichtungen erfolgt durch ein Prozessleitsystem.

### Bezugszeichenliste

- 1: Heißgasstrom
- 2: Einlass für Heißgasstrom
- 3, 3', 3": doppelwandiges Tauchrohr, Innenrohr, Außenrohr
- 4: Ringspalt
- 5: Kühlmittelzuleitung
- 6, 6': Kühlmittelringkammer, Auslassöffnung
- 7: Kühlmittelfilm
- 8: Düsenring
- 9: Düsenring
- 10: Kühlmittelzuleitung
- 11: Kühlmittelzuleitung
- 12, 12': Gasverteilerglocke, Gasdurchtrittsöffnungen
- 13: Gehäuse
- 14: Kühlmittelbad
- 15: Sammeltrichter
- 16: Schlackeabzug
- 17: Düsenring
- 18: Kühlmittelzuleitung
- 19: Überlauf
- 20: Rohgasauslass
- 21: Zwischenraum
- A: Achse von Tauchrohr und Gehäuse
- N: Niveau des Kühlmittelbades 14

## Patentansprüche

1. Vorrichtung zur Behandlung eines schlackehaltigen Heißgasstromes (1) in einem Gehäuse (13) mit
- einem oben angeordneten Einlass (2) für den Heißgasstrom (1),
- einem konzentrisch im Gehäuse (13) vertikal angeordneten Tauchrohr (3), in welches der Einlass (2) mündet,
- einem Kühlmittelbad (14), in welches das Tauchrohr (3) mit einem unteren Abschnitt eintaucht, und
- zumindest einer Rohgasauslassöffnung (20) für abgekühltes und von Schlacke befreites Rohgas,
wobei der untere Abschnitt des Tauchrohres (3) als eine radial erweiterte Gasverteilerglocke (12) im Kühlmittelbad (14) ausgebildet ist,
**dadurch gekennzeichnet, dass**
- die Gasverteilerglocke (12) durch eine im Wesentlichen kegelförmige Mantelfläche mit sich nach unten erweiterndem Querschnitt gebildet ist, und
- die Mantelfläche eine Vielzahl von Gasdurchtrittsöffnungen (12') aufweist, wobei die Gasdurchtrittsöffnungen (12') über den Umfang der Gasverteilerglocke (12) verteilt sind und die Abmessungen der Gasdurchtrittsöffnungen (12') mit der Eintauchtiefe im Kühlmittelbad (14) zunehmen.

2. Vorrichtung nach Anspruch 1, **dadurch gekennzeichnet, dass**
- das Tauchrohr (3) über seine gesamte Länge doppelwandig ausgeführt ist, wobei zwischen einem Innenrohr (3') und einem Außenrohr (3") des Tauchrohres (3) ein Ringspalt (4) vorhanden ist,
- eine Kühlmittelringkammer (6) an einem oberen Ende des Tauchrohres (3) zur Erzeugung eines Kühlmittelfilms (7) auf der Innenwandung des Tauchrohres (3) angeordnet ist,
- der Ringspalt (4) mit der Kühlmittelringkammer (6) verbunden ist und
- eine mit dem Ringspalt (4) verbundene Kühlmittelzuleitung (5) an einem unteren Abschnitt des Tauchrohrs (3) angeordnet ist.

3. Vorrichtung nach Anspruch 1 oder 2, **dadurch gekennzeichnet, dass** die Abmessungen der Gasdurchtrittsöffnungen (12') derart nach unten zunehmen, dass die Summe der Gasdruckverluste beim Durchströmen der Gasdurchtrittsöffnungen (12') und des Kühlmittelbades (14) unabhängig vom Strömungsweg des Gases im Kühlmittelbad (14) annähernd konstant bleibt.

4. Vorrichtung nach zumindest einem der Ansprüche 1 bis 3, **dadurch gekennzeichnet, dass** ein größter Durchmesser der Gasverteilerglocke (14) bezogen auf den Durchmesser des Tauchrohres (3) einen Quotienten von 1,5 bis 3 ergibt.

5. Vorrichtung nach zumindest einem der Ansprüche 1 bis 4, **dadurch gekennzeichnet, dass** sich ein Sammeltrichter (15) von einem an einem Boden des Gehäuses (13) angeordneten Schlackeabzug (16) kegelförmig bis zu der Innenwand des Gehäuses (13) erstreckt, wobei die Gasverteilerglocke (12) und der Sammeltrichter (15) so zueinander angeordnet sind, dass ein unterer Rand der Gasverteilerglocke (12) in den Sammeltrichter (15) hineinragt.

6. Vorrichtung nach zumindest einem der Ansprüche 1 bis 5, **dadurch gekennzeichnet, dass** zumindest zwei jeweils mit einer Kühlmittelzuleitung (10,18) von außerhalb des Gehäuses (13) fluidisch verbundene und in die Gasströmung gerichtete Sprüheinheiten konzentrisch um das Tauchrohr (3) angeordnet sind, wobei zumindest die erste Sprüheinheit in das Tauchrohrinnere und die zweite Sprüheinheit in einen zwischen dem Tauchrohr (3) und dem Gehäuse (13) ausgebildeten Zwischenraum (21) gerichtet ist.

7. Vorrichtung nach Anspruch 6, **dadurch gekennzeichnet, dass** die erste Sprüheinheit zumindest einen Düsenring (8), vorzugsweise zwei Düsenringe (8,9) in einem oberen Drittel des Tauchrohrs (3) umfasst, wobei jeder Düsenring (8,9) um den Außenumfang des Tauchrohres (3) angeordnet ist und Düsen aufweist, die sich durch die Doppelwandung in das Tauchrohr (3) hinein erstrecken.

8. Vorrichtung nach Anspruch 7, **dadurch gekennzeichnet, dass** die Düsen der Düsenringe (8,9) radial nach innen gerichtet sind und um einen Winkel, vorzugsweise in einem Bereich von 0° bis 30°, nach unten in Bezug auf die Horizontale geneigt sind.

9. Vorrichtung nach zumindest einem der Ansprüche 6, 7 oder 8, **dadurch gekennzeichnet, dass** die zweite Sprüheinheit insbesondere als Düsenring (17) mit einer Hauptsprührichtung nach unten ausgebildet ist und in einem oberen Bereich des Zwischenraumes (21) angeordnet ist, wobei die Innenwand des Gehäuses (13) und das Außenrohr (3") durch den Düsenring (17) mit Kühlmittel nahezu vollständig benetzbar sind.

10. Vorrichtung nach zumindest einem der Ansprüche 1 bis 9, **dadurch gekennzeichnet, dass** die zumindest eine Rohgasauslassöffnung (20) in einem oberen Drittel des Gehäuses (13) angeordnet ist, wobei mehrere Auslässe (20) auf verschiedenen Höhen im oberen Drittel des Gehäuses (13) anordenbar sind.

11. Flugstromvergaseranlage, **dadurch gekennzeichnet, dass** die Flugstromvergaseranlage einen Flugstromvergaser und eine Vorrichtung nach zumindest einem der Ansprüche 1 bis 10 umfasst, wobei die Vorrichtung stromabwärts des Flugstromvergasers angeordnet ist und der Einlass (2) für den Heißgasstrom (1) mit einem Heißgasaustritt des Flugstromvergasers fluidisch verbunden ist.

12. Verwendung einer Vorrichtung nach einem der Ansprüche 1 bis 10 zur Behandlung eines schlackehaltigen Heißgasstroms (1), wobei
- der Heißgasstrom (1) über den Einlass (2) in das Tauchrohr (3) in dem Gehäuse (13) einströmt,
- am oberen Ende des Tauchrohres (3) ein Kühlmittelfilm (7) auf der Innenwandung des Tauchrohres (3) erzeugt wird,
- der entlang des Tauchrohrs (3) strömende Heißgasstrom (1) im Kontakt mit dem Kühlmittelfilm (7) an der Innenwandung des Tauchrohres (3) vorgekühlt wird,
- der vorgekühlte Heißgasstrom (1) durch das Tauchrohr (3), welches mit einem unteren Abschnitt in ein Kühlmittelbad (14) eintaucht, in das Kühlmittelbad (14) eingeleitet wird und
- der Gasstrom mittels der Gasdurchtrittsöffnungen (12') mit der Eintauchtiefe zunehmenden Abmessungen in einer kegelförmigen Gasverteilerglocke (12), die sich an das Tauchrohr (3) anschließt, im Kühlmittelbad (14) dispergiert wird.

13. Verwendung nach Anspruch 12 , wobei
- ein Kühlmittel zu einem Ringspalt (4) zwischen einem Innenrohr (3') und einem Außenrohr (3") des Tauchrohres (3) zugeführt wird,
- das Tauchrohr (3) mit dem Kühlmittel innengekühlt wird, wobei das Kühlmittel im Ringspalt (4) aufwärts strömt,
- der Kühlmittelfilm (7) durch die Innenkühlung des Tauchrohres (3) gekühlt wird, und
- der Kühlmittelfilm (7) am oberen Ende des Tauchrohres (3) mit dem aus dem Ringspalt austretenden, zur Innenkühlung verwendeten Kühlmittel erzeugt wird.

14. Verwendung nach Anspruch 12 oder 13, **dadurch gekennzeichnet, dass** der Heißgasstrom (1) zusätzlich durch Einsprühen von Kühlmittel während des Durchströmens des Tauchrohres (3) gekühlt wird.

15. Verwendung nach zumindest einem der Ansprüche 12 bis 14, **dadurch gekennzeichnet, dass** ein aus dem Kühlmittelbad (14) austretende Rohgasstrom durch Einsprühen von Kühlmittel gekühlt wird.

## Claims

1. A device for treating a hot gas flow (1) containing slag in a housing (13), with
- an inlet (2), arranged on the top, for the hot gas flow (1),
- an immersion pipe (3) which is vertically arranged concentrically in the housing (13) and into which the inlet (2) issues,
- a coolant bath (14) into which the immersion pipe (3) dips with a lower portion, and
- at least one crude gas outlet port (20) for cooled crude gas freed of slag,
wherein the lower portion of the immersion pipe (3) being designed as a radially widened gas distributor bell (12) in the coolant bath (14), **characterized in that**
- the gas distributor bell (12) is formed by an essentially conical surface area with a downwardly widening cross section, and
- the surface area has a multiplicity of gas passage ports (12'), wherein the gas passage ports (12') are distributed over the circumference of the gas distributor bell (12), and the dimensions of the gas passage ports (12') increase with the depth of penetration of the coolant bath (14).

2. The device as claimed in claim 1, **characterized in that**
- the immersion pipe (3) is designed to be double-walled over its entire length, an annular gap (4) being present between an inner pipe (3') and an outer pipe (3") of the immersion pipe (3),
- an annular coolant chamber (6) is arranged at an upper end of the immersion pipe (3) for generating a coolant film (7) on the inner wall of the immersion pipe (3),
- the annular gap (4) is connected to the annular coolant chamber (6), and
- a coolant feed line (5) connected to the annular gap (4) is arranged at a lower portion of the immersion pipe (3).

3. The device as claimed in claim 1 or 2, **characterized in that** the dimensions of the gas passage ports (12') increase downward in such a way that the sum of the gas pressure losses during flow through the gas passage ports (12') and the coolant bath (14) remains approximately constant independently of the flow path of the gas in the coolant bath (14).

4. The device as claimed at least in one of the claims 1 to 3, **characterized in that** a maximum diameter of the gas distributor bell (14) with respect to the diameter of the immersion pipe (3) gives a quotient of 1.5 to 3.

5. The device as claimed at least in one of the claims 1 to 4, **characterized in that** a collecting funnel (15) extends conically from a slag offtake (16) arranged at a bottom of the housing (13) as far as the inner wall of the housing (13), the gas distributor bell (12) and the collecting funnel (15) being arranged with respect to one another such that a lower margin of the gas distributor bell (12) projects into the collecting funnel (15).

6. The device as claimed in at least one of the claims 1 to 5, **characterized in that** at least two spray units connected fluidically in each case to a coolant feed line (10, 18) from outside the housing (13) and directed into the gas flow are arranged concentrically around the immersion pipe (3), at least the first spray unit being directed into the immersion pipe interior and the second spray unit being directed into an interspace (21) formed between the immersion pipe (3) and the housing (13).

7. The device as claimed in claim 6, **characterized in that** the first spray unit comprises at least one nozzle ring (8), preferably two nozzle rings (8,9), in an upper third of the immersion pipe (3), wherein each nozzle ring (8,9) is arranged around the outer circumference of the immersion pipe (3) and has nozzles which extend through the double wall into the immersion pipe (3).

8. The device as claimed in claim 7, **characterized in that** the nozzles of the nozzle rings (8,9) are directed radially inward and are inclined downward at an angle preferably in a range of 0° to 30° with respect to the horizontal.

9. The device as claimed in at least one of the claims 6, 7 or 8, **characterized in that** the second spray unit is designed, in particular, as a nozzle ring (17) with a main spraying direction downward and is arranged in an upper region of the interspace (21), wherein the inner wall of the housing (13) and the outer pipe (3") are virtually completely wettable with coolant by the nozzle ring (17).

10. The device as claimed in at least in one of the claims 1 to 9, **characterized in that** the at least one crude gas outlet port (20) is arranged in an upper third of the housing (13), wherein a plurality of outlets (20) can be arranged at different heights in the upper third of the housing (13).

11. An entrained-bed gasifier plant, **characterized in that** the entrained-bed gasifier plant comprises an entrained-bed gasifier and a device according to at least one of the claims 1 to 10, the device being arranged downstream of the entrained-bed gasifier and the inlet (2) for the hot gas flow (1) being connected fluidically to a hot gas outlet of the entrained-bed gasifier.

12. Use of a device as claimed in one of the claims 1 to 10 for treating a hot gas flow (1) containing slag, wherein
- the hot gas flow (1) flowing into the immersion pipe (3) in the housing (13) via the inlet (2),
- a coolant film (7) being generated on the inner wall of the immersion pipe (3) at the upper end of the immersion pipe (3),
- the hot gas flow (1) flowing along the immersion pipe (3) is pre-cooled in contact with the coolant film (7) at the inner wall of the immersion pipe (3)
- the pre-cooled hot gas flow (1) is introduced through the immersion pipe (3), which dips with its lower portion into a coolant bath (14), into the coolant bath (14) and
- the gas flow is dispersed by means of the gas passage ports (12'), having dimensions increasing with the depth of penetration, in a conical gas distributor bell (12), which adjoins the immersion pipe (3), in the coolant bath (14).

13. Use as claimed in claim 12, wherein
- a coolant is supplied to an annular gap (4) between an inner pipe (3') and an outer pipe (3") of the immersion pipe (3),
- the immersion pipe (3) is internally cooled by the coolant, the coolant flowing upward in the annular gap,
- the coolant film (7) being cooled by the inner cooling of the immersion pipe (3), and
- the coolant film (7) being generated at the upper end of the immersion pipe (3) by means of the coolant emerging from the annular gap and used for internal cooling.

14. Use as claimed in claim 12 or 13, **characterized in that** the hot gas flow (1) is additionally cooled by coolant being sprayed in during the flow through the immersion pipe (3).

15. Use as claimed in claim 12 to 14, **characterized in that** a crude gas flow emerging from the coolant bath is cooled by coolant being sprayed in.

## Revendications

1. Appareil de traitement d'un courant de gaz chaud (1) contentant un laitier dans un boîtier (13) avec
- une entrée (2) pour le courant de gaz chaud (1) disposée en haut,
- un tube d'immersion (3) arrangé verticalement d'une manière concentrique dans le boîtier (13), dans lequel l'entrée (2) aboutit,
- un bain de réfrigérant (14) dans lequel une partie inférieure du tube d'immersion (3) s'immerge, et
- au moins une ouverture de sortie de gaz brut (20) pour le gaz brut refroidi et séparé de laitier,
dans lequel la partie inférieure de tube d'immersion est en forme d'une cloche de distribution de gaz (12) qui est élargi radialement dans le bain de réfrigérant, **caractérisé en ce que**
- la cloche de distribution de gaz (12) est formé d'une surface extérieure sensiblement sous forme conique dont la section transversale s'élargi vers le bas, et
- la surface extérieure est munie d'une pluralité d'orifices de passage de gaz (12') qui sont réparti sur la circonférence de la cloche de distribution de gaz (12) et dont les dimensions des orifices de passage de gaz (12') s'élargissent au fur et à mesure de la profondeur d'immersion dans le bain de réfrigérant (14).

2. Appareil selon la revendication 1, **caractérisé en ce que**
- le tube d'immersion (3) comporte une double paroi sur tout son largeur et il y a une fente annulaire (4) entre un tube intérieure (3') et un tube extérieure (3") du tube d'immersion (3),
- une chambre annulaire de réfrigérant (6) est arrangée sur une extrémité supérieure du tube d'immersion (3) pour générer un film de réfrigérant (7) sur la paroi intérieure du tube d'immersion (3),
- la fente annulaire (4) est connectée avec la chambre annulaire de réfrigérant (6) et
- une ligne d'alimentation de réfrigérant (5) connectée avec la fente annulaire (4) est arrangé sur une partie inférieure du tube d'immersion (3).

3. Appareil selon la revendication 1 ou 2, **caractérisé en ce que** les dimensions des orifices de passage de gaz (12') s'élargissent vers le bas en tant que la somme des pertes de pression en passant les orifices de passage de gaz (12') et le bain de réfrigérant (14) reste sensiblement constant indépendante de la voie de passage du gaz dans le bain de réfrigérant (14).

4. Appareil selon l'une quelconque des revendications 1 à 3, **caractérisé en ce qu'**un diamètre maximal de la cloche de distribution de gaz (14) par rapport au diamètre du tube d'immersion (3) est d'un quotient de 1,5 à 3.

5. Appareil selon l'une quelconque des revendications 1 à 4, **caractérisé en ce qu'**une trémie collectrice (15) s'étend d'une forme conique d'une décharge de laitier (16) située au font du boîtier(13) vers la paroi intérieur du boîtier (13), la cloche de distribution de gaz (12) et la trémie collectrice (15) étant disposées l'une par rapport à l'autre de sorte qu'un bord inférieur de la cloche de distribution de gaz (12) pénètre dans la trémie collectrice (15).

6. Appareil selon l'une quelconque des revendications 1 à 5, **caractérisé en ce qu'**au moins deux unités de pulvérisation, dont chaque unité est connectée fluidiquement avec une ligne d'alimentation de réfrigérant (10,18) de l'extérieur du boîtier (13) et dirigée dans le courant de gaz, sont disposées concentriquement au tube d'immersion (3), au moins la première unité de pulvérisation étant dirigée dans l'intérieure du tube d'immersion et la deuxième unité de pulvérisation étant dirigée dans un espace intermédiaire (21) formé entre le tube d'immersion (3) et le boîtier (13).

7. Appareil selon la revendication 6, **caractérisé en ce que** la première unité de pulvérisation possède au moins un anneau de tuyères (8), de préférence deux anneaux de tuyères (8,9) dans un tiers supérieur du tube d'immersion (3), chaque anneau de tuyères (8,9) étant positionné autour de la circonférence extérieure du tube d'immersion (3) et possède des tuyères qui s'étendent à travers la double paroi dans le tube d'immersion (3).

8. Appareil selon la revendication 7, **caractérisé en ce que** les tuyères des anneaux de tuyères (8,9) sont orientées radialement vers l'intérieur et inclinées d'un angle de préférence dans une plage de 0° à 30° vers le bas par rapport à l'horizontale.

9. Appareil selon l'une quelconque des revendications 6, 7 ou 8, **caractérisé en ce que** la deuxième unité de pulvérisation est réalisée en forme d'un anneau de tuyères (17) positionée sur une partie supérieure d'espace intermédiaire (21) sa direction principale d'éjection étant dirigée vers le bas, tant que la paroi intérieure du boîtier (13) et le tube extérieur (3") sont presque entièrement mouillable avec du réfrigérant par l'anneau de tuyères (17).

10. Appareil selon l'une quelconque des revendications 1 à 9, **caractérisé en ce que** ladite au moins une ouverture de sortie de gaz brut (20) est disposée dans un tiers supérieur du boîtier (13), autant permettant de disposer plusieurs ouvertures de sortie (20) à plusieurs hauteurs dans un tiers supérieur du boîtier (13).

11. Installation de gazéificateur à flux entrainé, **caractérisée en ce que** l'installation de gazéificateur à flux entrainé comprises un gazéificateur à flux entrainé et un appareil selon l'une quelconque des revendications 1 à 10, dans laquelle le appareil est située en aval du gazéificateur à flux entrainé et dont l'entrée (2) pour le courant de gaz chaud (1) est connecté fluidiquement avec une ouverture de sortie de gaz chaud du gazéificateur à flux entrainé.

12. Utilisation d'un appareil selon un des revendications 1 à 10 pour le traitement d'un courant de gaz chaud (1) contenant un laitier, dans lequel
- le courant de gaz chaud (1) afflue par l'entrée (2) dans le tube d'immersion (3) dans le boîtier (13),
- un film de réfrigérant (7) est généré sur une extrémité supérieure du tube d'immersion (3) sur la paroi intérieure du tube d'immersion (3),
- le courant de gaz chaud (1) qui afflue le long du tube d'immersion (3) est refroidi préalablement sur la paroi intérieure du tube d'immersion en contactant le film de réfrigérant (7),
- le courant de gaz chaud (1) préalablement refroidi est introduit par le tube d'immersion (3) qu'immerge avec une partie inférieure dans un bain de réfrigérant (14), dans le bain de réfrigérant (14) et
- le courant de gaz disperse dans le bain de réfrigérant (14) a l'aide des orifices de passage de gaz (12"), dont ses dimensions s'élargissent au fur et à mesure de la profondeur d'immersion, dans une cloche de distribution de gaz sous forme conique qui se raccorde au tube d'immersion (3).

13. Utilisation selon la revendication 12, dans laquelle
- un réfrigérant est conduit vers une fente annulaire (4) entre un tube intérieur (3') et un tube extérieur (3") du tube d'immersion (3),
- comme le réfrigérant afflue vers le haut dans la fente annulaire (4) l'intérieur du tube d'immersion (3) est refroidi à l'aide du réfrigérant,
- le film de réfrigérant (7) est refroidi par le refroidissement interne du tube d'immersion (3), et
- le film de réfrigérant (7) est généré par le réfrigérant, utilisé pour le refroidissement interne, qui sort d'une fente annulaire de l'extrémité supérieure du tube d'immersion (3).

14. Utilisation selon la revendication 12 ou 13, **caractérisé en ce que** le courant de gaz chaud (1) est refroidi en plus en y pulvérisant de réfrigérant au cours du passage du tube d'immersion (3).

15. Utilisation selon l'une quelconque des revendications 12 à 14, **caractérisé en ce qu'**un courant de gaz brut sortant d'un bain de réfrigérant (14) est refroidi à l'aide de pulvérisant de réfrigérant.
